# EUROPÄISCHE PATENTSCHRIFT

(11) **EP 3 074 654 B1**
(45) Veröffentlichungstag und Bekanntmachung des Hinweises auf die Patenterteilung: **15.07.2020**
(21) Anmeldenummer: 14830380.3
(22) Anmeldetag: 26.11.2014
(51) Int. Cl.: F16D 47/04, B60T 10/02

(54) **HYDRODYNAMISCHE MASCHINE**
HYDRODYNAMIC MACHINE
MACHINE HYDRODYNAMIQUE

(30) Priorität: 26.11.2013 DE 102013224095
(43) Veröffentlichungstag der Anmeldung: 05.10.2016
(73) Patentinhaber: Voith Patent GmbH, 89522 Heidenheim (DE)
(72) Erfinder: MENNE, Achim, 74564 Crailsheim (DE); LAUKERMANN, Dieter, 74564 Crailsheim (DE); SCHADE, Ravi, 74564 Crailsheim (DE); ADAMS, Werner, 74564 Crailsheim (DE)
(74) Vertreter: Voith Patent GmbH - Patentabteilung
(86) Internationale Anmeldenummer: PCT/EP2014/003150
(87) Internationale Veröffentlichungsnummer: WO 2015/078580

(56) Entgegenhaltungen:
- DE-A1- 10 104 813
- DE-A1- 10 255 054
- DE-A1- 10 305 239
- DE-A1-102010 050 667
- DE-A1-102011 120 615
- DE-A1-102011 120 619
- DE-A1-102012 004 686
- DE-A1-102012 004 687
- US-A- 5 829 562

## Beschreibung

Die Erfindung betrifft eine hydrodynamische Maschine, insbesondere einen hydrodynamischen Retarder, zur Erzeugung eines Bremsmomentes mittels eines Arbeitsfluides, im Einzelnen gemäß dem Oberbegriff des unabhängigen Anspruchs. Insbesondere betrifft die Erfindung hydrodynamische Retarder, die als verschleißfreie Dauerbremse in Antriebsstränge, insbesondere Kraftfahrzeugantriebsstränge, beispielsweise in Lastkraftwagen, eingesetzt werden.

Derartige Retarder können als Wasserretarder, die als Arbeitsmedium das Kühlwasser des Fahrzeuges nutzen, oder als Ölretarder, die als Arbeitsmedium ein Öl verwenden, ausgebildet sein. Der Wasserretarder ist dabei meist in den Fahrzeugkühlkreislauf eingebunden bzw. an diesen angebunden. Der Ölretarder weist dagegen einen Ölkreislauf und ein Ölkühlkreislauf auf, wobei der Ölkühlkreislauf in den Fahrzeugkühlkreislauf eingebunden bzw. an diesen angebunden sein kann. Ein derartiger Retarder umfasst zwei Schaufelräder, die miteinander einen torusförmigen Arbeitsraum ausbilden, von denen wenigstens eines über eine Drehachse der hydrodynamischen Maschine umläuft. Der Arbeitsraum ist für einen ersten Betriebszustand, Bremsen, über wenigstens einen vorgesehenen Arbeitsmediumeinlass mit Arbeitsmedium befüllbar. Während der Bremsung bildet sich im Arbeitsraum eine Kreislaufströmung, wobei das Arbeitsmedium ein Drehmoment und/oder eine Antriebsleistung hydrodynamisch vom ersten auf das zweite Schaufelrad überträgt. Für einen zweiten Betriebszustand, Nicht-Bremsbetrieb, wird das Arbeitsmedium aus dem Arbeitsraum des Retarders abgepumpt, um eine Drehmoment- und/oder Antriebsleistungsübertragung zu vermeiden.

Um unnötige Verluste durch das Mitdrehen des Rotors im Nicht-Bremsbetrieb zu vermeiden, sind weiterhin Retarder bekannt, die vom Antrieb bzw. vom Getriebe des Fahrzeuges entkoppelbar sind. Hierzu wird eine Trennvorrichtung verwendet. Die Trennvorrichtung ist, wie z. B. in der DE 10 2011 120 620 A1 offenbart, zwischen Getriebe und Retarder positioniert bzw. angeordnet und ist in der Regel dem Getriebe zugeordnet. Insbesondere bei Wasserretardern ist es erforderlich, dass der Arbeitsmediumbereich und der Bereich mit den zu schmierenden Bauteilen, wie den Lagern und der Trennvorrichtung, voneinander getrennt sind. Die Schmierung erfolgt in der Regel mittels Getriebeöl aus dem Getriebe.

Die Zuordnung zum Getriebe hat den Nachteil, dass der Retarder nicht zusammen mit der Trennvorrichtung als geprüfte Baueinheit geliefert und an das Getriebe montiert werden kann, wodurch die Betriebssicherheit des Retarders beeinträchtigt werden kann.

Die DE10 2011 120 615 A1 offenbart beispielsweise einen Antriebsstrang mit einem Retarder. Weiterhin ist eine Entkopplungsvorrichtung zwischen Antriebsstrang und Rotor vorgesehen, die entweder direkt in der Rotorwelle oder im Hauptzweig angeordnent ist. Diese beiden Anordnungen der Entkoppelung sind zwar theoretisch denkbar, aber nur mit sehr großem Aufwand/Kosten umsetzbar. Eine der Aufgaben der Erfindung ist es, den Aufbau derart zu ändern, dass die Betriebssicherheit verbessert wird.

Die Aufgabe wird mittels eines hydrodynamischen Retarder mit den Merkmalen des Anspruches 1 sowie mit einem Antriebsstrang mit den Merkmalen von Anspruch 7 gelöst. In den abhängigen Ansprüchen sind vorteilhafte und besonders zweckmäßige Ausgestaltungen der Erfindung angegeben.

Eine erfindungsgemäße hydrodynamische Maschine, insbesondere hydrodynamischer Retarder, weist wie herkömmlich, ein Gehäuse auf, in dem zumindest eine Welle, zwei Schaufelräder und ein Hochtriebszahnrad angeordnet sind. Dabei kann ein Schaufelrad als Rotor und das Andere als Stator ausgebildet sein, die einen torusförmigen mit einem Arbeitsmedium befüllbaren Arbeitsraum ausbilden. Wobei zumindest ein Schaufelrad, der Rotor, und das Hochtriebszahnrad um eine gemeinsame Drehachse angeordnet und unabhängig voneinander drehbar gelagert sind.

Erfindungsgemäß wird vorgeschlagen, dass zur Drehmomentübertragung zwischen Hochtriebszahnrad und Schaufelrad, insbesondere Rotor, eine Koppelvorrichtung vorgesehen ist, die im Gehäuse der hydrodynamischen Maschine angeordnet ist. Durch diese Anordnung kann die gesamte Funktionalität des Retarders in einer Einheit vorab montiert und getestet werden.

Weiterhin ist das Hochtriebszahnrad auf der Welle drehbar gelagert und der Rotor mit der Welle drehfest verbunden. Im Nicht-Bremsbetrieb ist bei dieser Anordnung die Welle und der Rotor vollständig von der Antriebsseite entkoppelt, sodass nur die Masse des Hochtriebszahnrads mit bewegt werden muss.

Die Koppelvorrichtung im Sinne der Erfindung umfasst zumindest eine Synchronisiereinheit, eine Koppeleinheit und einen Aktuator. Es ist aber nicht ausgeschlossen, dass auch andere Koppelvorrichtungen verwendet werden können, wie z. B. eine Reibkupplungen usw. Solche andere Koppelvorrichtungen werden von den Patentansprüchen nicht abgedeckt und es handelt sich um Beispiele, die das Verständnis der Erfindung erleichtern.

Die Koppeleinheit kann eine Schiebemuffe sein, die auf einer Mitnahmeverzahnung an einer Drehmomentstütze verschiebbar angeordnet ist und von dort auf eine entsprechende Verzahnung am Hochtriebszahnrad verschoben werden kann. Weiterhin kann die Koppeleinheit ein Synchronisierelement mit einer Sperrverzahnung umfassen.

Der Aktuator umfasst ein durch ein Fluid bewegbarer oder elektrisch betätigbaren Kolben umfassen, mittels dem die Schiebemuffe verschoben werden kann.

So besteht weiterhin die Option die Betätigung des Aktuators mittels Öldruck oder pneumatischen Druck zu realisieren.

Des Weiteren sind unterschiedliche Konzepte denkbar, wie die Koppelvorrichtung im Gehäuse angeordnet ist. In einer bevorzugten Ausführung kann die Koppelvorrichtung in Axialrichtung gesehen, zwischen Hochtriebszahnrad und Rotor angeordnet sein. Erfindungsgemäß ist der Kolben im Rotorgehäuse gelagert.

Der Kolben kann beispielsweise als Ringkolben ausgeführt sein. Es können aber auch mehrere, vorzugsweise drei, einzelnen Kolben um die gemeinsame Drehachse angeordnet sein, die synchron angesteuert werden, so besteht die Möglichkeit Kanäle zwischen den Kolben anzuordnen.

Zur Abführung von Leckageverlusten kann die Welle einen Kanal aufweisen, der mit einer Leckagekammer verbunden ist, in der sich die Leckverluste aus dem Arbeitsraum sammeln. Diese können beispielsweise über den Kühlkreislauf des Getriebes bzw. Motors in den Kühlkreislauf zurückgeführt werden.

In einer weiteren vorteilhaften Ausführung kann die Koppelvorrichtung in Axialrichtung gesehen vor dem Hochtriebszahnrad und dem Rotor angeordnet sein. Bei dieser Ausführung können die Leckageverluste über Kanäle im Rotorgehäuse abgeführt werden.

Weiterhin wird im Anspruch 7 ein Antriebsstrang für eine Maschine beansprucht, umfassend ein Getriebe und eine hydrodynamische Maschine, wobei das Getriebe und die hydrodynamische Maschine baulich miteinander verbunden sind, dadurch gekennzeichnet, dass als hydrodynamische Maschine eine hydrodynamische Maschine nach einem der Ansprüche 1 bis 6 vorgesehen ist, wobei die Koppelvorrichtung der hydrodynamischen Maschine mit der Synchronisation zwischen Getriebe und Hochtriebszahnrad angeordnet ist.

Weiterhin kann vorgesehen sein, dass die Schmierung der Koppelvorrichtung getriebeseitig erfolgt, wobei dann gleichzeitig auch die Schmierung der Lager der hydrodynamischen Maschine erfolgt.

Des Weiteren kann die getriebeseitig Lagerung der Welle im Getriebegehäuse erfolgen, wodurch sich der Aufbau des Retardergehäuses vereinfacht.

Wird die erste Ausführung wie oben beschrieben gewählt, können die Leckageverluste getriebeseitig abgeführt werden.

Wird die zweite Ausführung wie oben beschrieben gewählt, können die Leckageverluste über mindestens einen Kanal im Rotorgehäuse abgeführt werden. Weitere Merkmale sowie Vorteile der erfindungsgemäßen hydrodynamischen Maschine und des Antriebsstrangs ergeben sich aus der nachfolgenden Beschreibung bevorzugter Ausführungsbeispiele unter Bezugnahme auf die Zeichnungen.

Nachfolgend wird die Erfindung anhand von Skizzen näher erläutert. In diesen zeigen:
Figur 1 eine erste erfindungsgemäße Ausführung der hydrodynamischen Maschine
Figur 2 eine Ausführung der hydrodynamischen Maschine, wobei diese Ausführung nicht unter den Ansprüchen fällt
Figur 3 eine weitere erfindungsgemäße Ausführung der hydrodynamischen Maschine

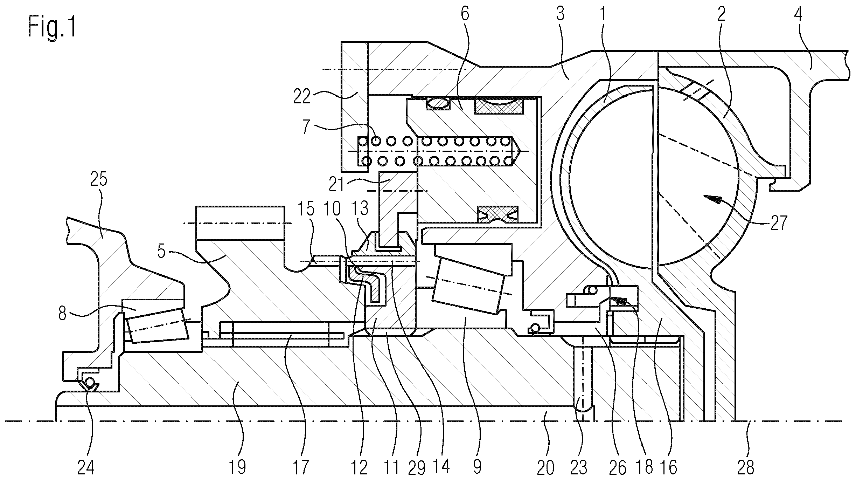

Figur 1 zeigt eine erfindungsgemäße erste Ausführung einer hydrodynamischen Maschine bzw. eines hydrodynamischen Retarders. In dieser Ausführung ist die Koppelvorrichtung erfindungsgemäß innerhalb der Baugruppe des Retarders positioniert. Mittels der Koppelvorrichtung kann der Retarder mit dem Getriebe eines Antriebsstrangs drehfest verbunden werden. Das bedeutet, dass der Retarder im Nicht- Bremsbetrieb vom Getriebe entkoppelt ist.

Beim Umschalten bzw. sobald der Bremsbetrieb erwartet oder gefordert wird, wird mittels der Koppelvorrichtung der Rotor 1 des Retarders auf Getriebedrehzahl beschleunigt und schließlich drehfest gekoppelt.

In der hier gezeigten Ausführung ist die Koppelvorrichtung zwischen Hochtriebszahnrad 5 und Rotor 1 positioniert, wobei das Hochtriebszahnrad 5 mittels des Relativlagers 17 auf der Rotorwelle 19 gelagert ist. Erst bei Aktivierung der Koppelvorrichtung entsteht eine drehfeste Verbindung zwischen Hochtriebszahnrad 5 und Rotor 1, sodass ein Drehmoment bzw. Bremsmoment vom Getriebe auf den Stator übertragen werden kann.

In Figur 1 wurde zur Vereinfachung der Darstellung die Schraubverbindung zwischen Getriebegehäuse und Retardergehäuse weggelassen. Die Verbindung zwischen Retarder und Getriebe erfolgt einmal wie hier gezeigt über das Lager 8 und einer hier nicht gezeigten Flanschverbindung.

Die Koppelvorrichtung besteht aus mehreren Funktionsteilen, dem Aktivator, bestehend aus einem Kolben 6, einer Rückstellfeder 7 sowie einer Schaltgabel 21, welche in eine Schiebemuffe 13 eingreift, einer Drehmomentstütze 11 und einem Synchronelement 12 zwischen Drehmomentstütze 11 und Hochtriebszahnrad 5. Zwischen den Bauteilen ist jeweils eine Mitnahmeverzahnung 14,15 vorgesehen. Der Kolben 6 kann unterschiedlich ausgeführt sein. Einmal kann dieser als Ringkolben, der in einer Ringnut um die Achse 28 im Rotorgehäuse 3 geführt wird, ausgeführt sein oder es werden mind. drei Einzelkolben vorgesehen, die jeweils in einer zylindrischen Bohrung des Rotorgehäuseteils 3 eingesetzt und geführt sind. Zur Betätigung des Kolbens 6 sind hier nicht gezeigte Versorgungskanäle vorgesehen, über den der/die Kolbenräume mit einem Fluid, insbesondere Luft, Öl oder alternativ Kühlwasser, gefüllt werden kann/können. Alternativ kann aber auch eine elektrisch betätigte Schiebervorrichtung vorgesehen werden, mittels der die Schiebemuffe 13 verschoben werden kann.

Die Schiebemuffe 13 ist über die Mitnahmeverzahnung 14 zwischen Schiebemuffe 13 und Drehmomentstütze 11 verschiebbar gelagert. Die Drehmomentstütze 11 ist drehfest mit der Welle 19 verbunden. Zur Synchronisation der Getriebedrehzahl bzw. der Drehzahl des Hochtriebszahnrades 5 ist zwischen Hochtriebszahnrad 5 und Drehmomentstütze 11 ein Synchronisationselement mit einer Sperrverzahnung 10 vorgesehen. Dabei verhindert die Sperrverzahnung 10 ein Verschieben der Schiebemuffe 13, wenn die Mitnahmeverzahnung 14 nicht mit der Mitnahmeverzahnung 15 des Hochtriebszahnrades 5 fluchtet, weil die Drehzahlen noch nicht angeglichen sind.

Beim Zuschalten des Retarders erfolgt somit erst eine Synchronisation der Drehzahlen, vom Hochtriebszahnrad 5 und Welle 19 mit Rotor 1, und in einem zweiten Schritt die drehfeste Kopplung über die Schiebemuffe 13.

Die Schmierung der Lager 8, 9, des Hochtriebszahnrades 5 und der Koppelvorrichtung erfolgt mittels Öl welches auch zur Getriebeschmierung verwendet wird.

Zum Abführen von Leckagewasser aus dem Arbeitsraum 27 durch die Gleitringdichtung 18 in die Leckagekammer 26, ist in der Welle 19 ein Kanal, bestehend aus den Kanalstücken 23, 20, vorgesehen. Der Kanal endet auf der Getriebeseite im Getriebe und führt in die Umgebung.

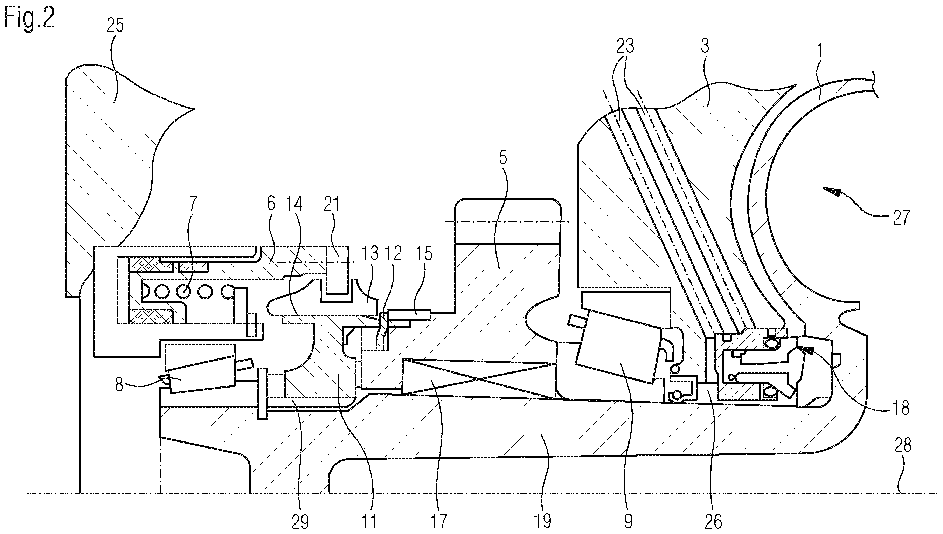

Figur 2 zeigt eine nicht-erfindungsgemäße Ausführung einer hydrodynamischen Maschine bzw. eines hydrodynamischen Retarders. Auch in dieser Ausführung ist die Koppelvorrichtung innerhalb der Baugruppe des Retarders positioniert.

In der hier gezeigten Ausführung ist die Koppelvorrichtung in axialer Richtung gesehen vor dem Hochtriebszahnrad 5 und dem Rotor 1 positioniert, wobei auch hier das Hochtriebszahnrad 5 mittels eines Relativlagers 17 auf der Rotorwelle 19 gelagert ist. Erst bei Aktivierung der Koppelvorrichtung entsteht eine drehfeste Verbindung zwischen Hochtriebszahnrad 5 und Rotor 1, sodass ein Drehmoment bzw. Bremsmoment vom Getriebe auf den Stator übertragen werden kann.

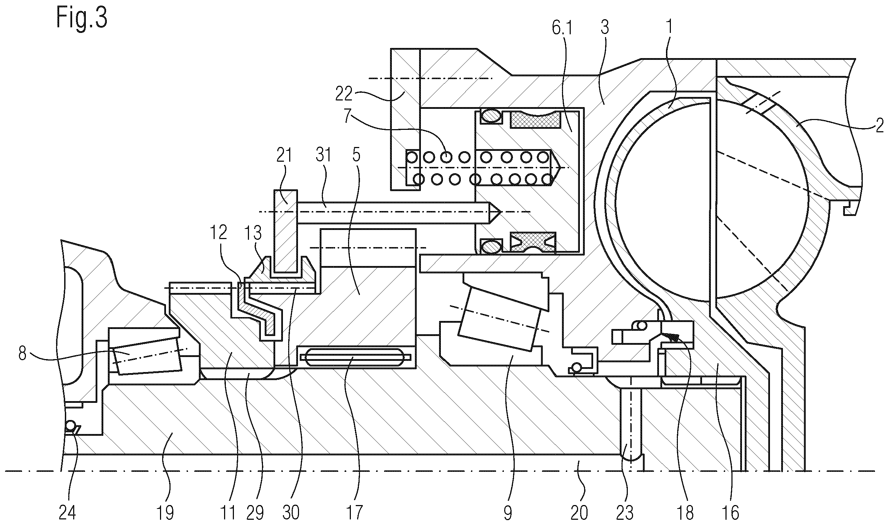

Figur 3 zeigt eine weitere erfindungsgemäße Ausführungsform der hydrodynamischen Maschine. Diese Ausführung unterscheidet sich von der aus Fig. 1 dadurch, dass die Koppelvorrichtung mit der Synchronisation zwischen Getriebe 25 und Hochtriebszahnrad 5 angeordnet ist.

Durch diese Anordnung kann das Hochtriebzahnrad 5 näher an die Kreislaufteile, Rotor 1 und Stator 2, gerückt werden. Weiterhin unterscheidet sich diese Ausführung dadurch von der aus Fig. 1, das die Schiebemuffe 13 im Nicht-Bremsbetrieb auf dem Hochtriebszahnrad 5 angeordnet ist. Dadurch wird die Masse, die bei der Synchronisation beschleunigt werden muss, erheblich reduziert.

### Bezugszeichenliste

- 1.: Rotor
- 2.: Stator
- 3.: Rotorgehäuse
- 4.: Statorgehäuse
- 5.: Antriebszahnrad
- 6.: Betätigungskolben/Einzel-Betätigungskolben
- 7.: Rückstellfeder
- 8.: Lager1
- 9.: Lager2
- 10.: Sperrverzahnung
- 11.: Drehmomentstütze
- 12.: Synchronelement
- 13.: Schiebemuffe
- 14.: Mitnahmeverzahnung Schiebemuffe/Drehmomentstütze
- 15.: Mitnahmeverzahnung Antriebszahnrad
- 16.: Mitnahmeverzahnung Welle/Rotor
- 17.: Relativlager Antriebszahnrad
- 18.: Gleitringdichtung
- 19.: Retarderwelle
- 20.: Entlastungsböhrung axial
- 21.: Schaltgabel
- 22.: Federhalter
- 23.: Entlastungsbohrung radial
- 24.: Abdichtung1 (RWDR)
- 25.: Getriebe
- 26.: Leckagekammer
- 27.: Arbeitsraum
- 28.: Drehachse
- 29.: Mitnahmeverzahnung Drehmomentstütze
- 30.: Halteelement Schaltgabel

## Patentansprüche

1. Hydrodynamische Maschine, insbesondere hydrodynamischer Retarder, umfassend ein Gehäuse, in dem zumindest eine Welle (19), zwei Schaufelräder, umfassend ein Rotor (1) und ein Stator (2), die einen torusförmigen mit einem Arbeitsmedium befüllbaren Arbeitsraum ausbilden und ein Hochtriebszahnrad (5) angeordnet sind, wobei zumindest der Rotor (1) und das Hochtriebszahnrad (5) um eine gemeinsame Drehachse (28) angeordnet und unabhängig voneinander drehbar gelagert sind,
**dadurch gekennzeichnet,**
**dass** zur Drehmomentübertragung zwischen Hochtriebszahnrad (5) und Rotor (1), eine Koppelvorrichtung (6, 7, 11, 12, 13, 14, 15, 21) vorgesehen ist, die im Gehäuse (3, 4) der hydrodynamischen Maschine angeordnet ist, wobei das Hochtriebszahnrad (5) auf der Welle (19) drehbar gelagert und der Rotor (1) mit der Welle (19) drehfest verbunden ist, und die Koppelvorrichtung eine Synchronisiereinheit (12), eine Koppeleinheit (10, 11, 12, 13, 14,) und einen Aktuator (6, 7, 21) umfasst, wobei der Aktuator (6, 7, 21) einen durch ein Fluid bewegbaren oder elektrisch betätigbaren Kolben (6) umfasst, wobei der Kolben (6) im Rotorgehäuse (3) gelagert ist.

2. Hydrodynamische Maschine nach Anspruch 1,
**dadurch gekennzeichnet,**
**dass** die Betätigung des Aktuators (6, 7, 21) mittels Öldruck oder pneumatischen Druck erfolgt.

3. Hydrodynamische Maschine nach Anspruch 1,
**dadurch gekennzeichnet,**
**dass** die Koppeleinheit (10, 11, 12, 13, 14,) ein Synchronisierelement (12) mit einer Sperrverzahnung (10) umfasst.

4. Hydrodynamische Maschine nach Anspruch 1,
**dadurch gekennzeichnet,**
**dass** die Koppelvorrichtung (6, 7, 11, 12, 13, 14, 15, 21) in Axialrichtung gesehen zwischen Hochtriebszahnrad (5) und Rotor (1) angeordnet ist.

5. Hydrodynamische Maschine nach Anspruch 1,
**dadurch gekennzeichnet,**
**dass** die Welle (19) einen Kanal (20, 23) aufweist, der mit einer Leckagekammer (26) verbunden ist, in der sich die Leckverluste aus dem Arbeitsraum (27) sammeln.

6. Hydrodynamische Maschine nach Anspruch 1,
**dadurch gekennzeichnet,**
**dass** die Koppelvorrichtung (6, 7, 11, 12, 13, 14, 15, 21) in Axialrichtung gesehen vor dem Hochtriebszahnrad (5) und dem Rotor (1) angeordnet ist.

7. Antriebsstrang für eine Maschine, umfassend ein Getriebe und eine hydrodynamische Maschine, wobei das Getriebe und die hydrodynamische Maschine baulich miteinander verbunden sind,
**dadurch gekennzeichnet,**
**dass** als hydrodynamische Maschine eine hydrodynamische Maschine nach einem der Ansprüche 1 bis 6 vorgesehen ist, wobei die Koppelvorrichtung (6, 7, 11, 12, 13, 14, 15, 21) der hydrodynamischen Maschine mit der Synchronisation zwischen Getriebe (25) und Hochtriebszahnrad (5) angeordnet ist.

8. Antriebsstrang nach Anspruch 7,
**dadurch gekennzeichnet,**
**dass** die Schmierung der Koppelvorrichtung (6, 7, 11, 12, 13, 14, 15, 21) getriebeseitig erfolgt.

9. Antriebsstrang nach Anspruch 7,
**dadurch gekennzeichnet,**
**dass** die Welle (19) getriebeseitig im Getriebegehäuse (25) gelagert ist.

10. Antriebsstrang nach Anspruch 7
**dadurch gekennzeichnet,**
**dass** die Leckageverluste getriebeseitig abgeführt werden.

11. Antriebsstrang nach Anspruch 10,
**dadurch gekennzeichnet,**
**dass** die Leckageverluste über mindestens einen Kanal (20, 23,) im Rotorgehäuse (3) abgeführt werden.

## Claims

1. Hydrodynamic machine, in particular a hydrodynamic retarder, comprising a housing in which at least one shaft (19), two impellers comprising a rotor (1) and a stator (2) which configure a toroidal operating chamber which is capable of being filled with an operating medium, and a drive output gear wheel (5), wherein at least the rotor (1) and the drive output gear wheel (5) are disposed about a common rotation axis (28) and are mounted so as to be rotatable in a mutually independent manner,
**characterized in that**
a coupling device (6, 7, 11, 12, 13, 14, 15, 21) which is disposed in the housing (3, 4) of the hydrodynamic machine is provided for transmitting torque between the drive output gear wheel (5) and the rotor (1), wherein the drive output gear wheel (5) is mounted rotatably on the shaft (19) and the rotor (1) is connected in a rotationally fixed manner to the shaft (19), and the coupling device comprises a synchronizing unit (12), a coupling unit (10, 11, 12, 13, 14) and an actuator (6, 7, 21), wherein the actuator (6, 7, 21) comprises a piston (6) which is able to be moved by a fluid or is able to be electrically activated, wherein the piston (6) is mounted in the rotor housing (3).

2. Hydrodynamic machine according to Claim 1,
**characterized in that**
the activation of the actuator (6, 7, 21) takes place by means of oil pressure or pneumatic pressure.

3. Hydrodynamic machine according to Claim 1,
**characterized in that**
the coupling unit (10, 11, 12, 13, 14) comprises a synchronizing element (12) having a locking toothing (10) .

4. Hydrodynamic machine according to Claim 1,
**characterized in that**
the coupling device (6, 7, 11, 12, 13, 14, 15, 21), when viewed in the axial direction, is disposed between the drive output gear wheel (5) and the rotor (1).

5. Hydrodynamic machine according to Claim 1,
**characterized in that**
the shaft (19) has a duct (20, 23) which is connected to a leakage chamber (26) in which losses due to leakage from the operating chamber (27) accumulate.

6. Hydrodynamic machine according to Claim 1,
**characterized in that**
the coupling device (6, 7, 11, 12, 13, 14, 15, 21), when viewed in the axial direction, is disposed ahead of the drive output gear wheel (5) and the rotor (1).

7. Power train for a machine, comprising a gearbox and a hydrodynamic machine, wherein the gearbox and the hydrodynamic machine are connected to one another in terms of construction,
**characterized in that**
a hydrodynamic machine according to one of Claims 1 to 6 is provided as the hydrodynamic machine, wherein the coupling device (6, 7, 11, 12, 13, 14, 15, 21) of the hydrodynamic machine, conjointly with the synchronizing mechanism, is disposed between the gearbox (25) and the drive output gear wheel (5).

8. Power train according to Claim 7,
**characterized in that**
the lubrication of the coupling device (6, 7, 11, 12, 13, 14, 15, 21) takes place at the gearbox.

9. Power train according to Claim 7,
**characterized in that**
the shaft (19) is mounted in the gearbox housing (25) at the gearbox.

10. Power train according to Claim 7,
**characterized in that**
the losses due to leakage are discharged at the gearbox.

11. Power train according to Claim 10,
**characterized in that**
the losses due to leakage are discharged by way of at least one duct (20, 23) in the rotor housing (3).

## Revendications

1. Machine hydrodynamique, en particulier ralentisseur hydrodynamique, comprenant un carter, dans lequel sont agencés au moins un arbre (19), deux roues à aubes, comprenant un rotor (1) et un stator (2), qui forment une chambre de travail toroïdale pouvant être remplie d'un milieu de travail, et une roue dentée multiplicatrice (5), au moins le rotor (1) et la roue dentée multiplicatrice (5) étant agencés autour d'un axe de rotation commun (28) et montés rotatifs indépendamment l'un de l'autre,
**caractérisé en ce que**
pour assurer la transmission de moment de rotation entre la roue dentée multiplicatrice (5) et le rotor (1), un dispositif d'accouplement (6, 7, 11, 12, 13, 14, 15, 21) est prévu, qui est agencé dans le carter (3, 4) de la machine hydrodynamique, la roue dentée multiplicatrice (5) étant montée rotative sur l'arbre (19) et le rotor (1) étant raccordé de manière immobilisée en rotation avec l'arbre (19), et le dispositif d'accouplement comprenant une unité de synchronisation (12), une unité d'accouplement (10, 11, 12, 13, 14) et un actionneur (6, 7, 21), l'actionneur (6, 7, 21) comprenant un piston (6) pouvant être déplacé par un fluide ou activable électriquement, le piston (6) étant monté dans le carter de rotor (3).

2. Machine hydrodynamique selon la revendication 1,
**caractérisée en ce que** l'activement de l'actionneur (6, 7, 21) a lieu au moyen d'une pression d'huile ou d'une pression pneumatique.

3. Machine hydrodynamique selon la revendication 1,
**caractérisée en ce que** l'unité d'accouplement (10, 11, 12, 13, 14) comprend un élément de synchronisation (12) muni d'une denture de blocage (10).

4. Machine hydrodynamique selon la revendication 1,
**caractérisée en ce que** le dispositif d'accouplement (6, 7, 11, 12, 13, 14, 15, 21) est agencé dans la direction axiale entre la roue dentée multiplicatrice (5) et le rotor (1).

5. Machine hydrodynamique selon la revendication 1,
**caractérisée en ce que** l'arbre (19) comprend un canal (20, 23), qui est raccordé avec une chambre de fuites (26), dans laquelle les pertes par fuites issues de la chambre de travail (27) sont collectées.

6. Machine hydrodynamique selon la revendication 1,
**caractérisée en ce que** le dispositif d'accouplement (6, 7, 11, 12, 13, 14, 15, 21) est agencé dans la direction axiale avant la roue dentée multiplicatrice (5) et le rotor (1).

7. Groupe motopropulseur pour une machine, comprenant un entraînement et une machine hydrodynamique, l'entraînement et la machine hydrodynamique étant structuralement raccordés l'un avec l'autre,
**caractérisé en ce que**
une machine hydrodynamique selon l'une quelconque des revendications 1 à 6 est prévue en tant que machine hydrodynamique, le dispositif d'accouplement (6, 7, 11, 12, 13, 14, 15, 21) de la machine hydrodynamique étant agencé avec la synchronisation entre l'entraînement (25) et la roue dentée multiplicatrice (5).

8. Groupe motopropulseur selon la revendication 7,
**caractérisé en ce que** la lubrification du dispositif d'accouplement (6, 7, 11, 12, 13, 14, 15, 21) a lieu du côté de l'entraînement.

9. Groupe motopropulseur selon la revendication 7,
**caractérisé en ce que** l'arbre (19) est monté dans le carter de l'entraînement (25) du côté de l'entraînement.

10. Groupe motopropulseur selon la revendication 7,
**caractérisé en ce que** les pertes par fuites sont évacuées du côté de l'entraînement.

11. Groupe motopropulseur selon la revendication 10,
**caractérisé en ce que** les pertes par fuites sont évacuées par au moins un canal (20, 23) dans le carter de rotor (3).
